Europäisches Patentamt

European Patent Office

Office européen des brevets

(19)

(11) Numéro de publication : **0 508 019 B1**

# (12) FASCICULE DE BREVET EUROPEEN

(45) Date de publication du fascicule du brevet :
**27.12.95 Bulletin 95/52**

(51) Int. Cl.$^6$ : **H01J 35/10, F16C 39/06**

(21) Numéro de dépôt : **91400937.8**

(22) Date de dépôt : **08.04.91**

(54) **Dispositif de compensation du poids pour tube à rayons X comportant des paliers magnétiques passifs**

(43) Date de publication de la demande :
**14.10.92 Bulletin 92/42**

(45) Mention de la délivrance du brevet :
**27.12.95 Bulletin 95/52**

(84) Etats contractants désignés :
**AT DE GB IT NL**

(56) Documents cités :
**EP-A- 0 360 654
FR-A- 2 231 085
IEEE TRANSACTIONS ON MAGNETICS, vol.
17, no. 1, Janvier 1981, New York,US;pages
1169 - 1173; J.-P. YONNET: "Permanent
magnet bearings and couplings"
PATENT ABSTRACTS OF JAPAN, vol. 7, no. 31
(M-192)(1176) 8 Février 1983; & JP-A-57186618**

(73) Titulaire : **GENERAL ELECTRIC CGR S.A.
100, rue Camille-Desmoulins
F-92130 Issy les Moulineaux (FR)**

(72) Inventeur : **Penato, Jean-Marie
Cabinet BALLOT-SCHMIT,
7, rue Le Sueur
F-75116 Paris (FR)**
Inventeur : **Noualhaguet, Pierre
Cabinet BALLOT-SCHMIT,
7, rue Le Sueur
F-75116 Paris (FR)**
Inventeur : **Laurent, Michel
Cabinet BALLOT-SCHMIT,
7, rue Le Sueur
F-75116 Paris (FR)**

(74) Mandataire : **Ballot, Paul Denis Jacques et al
Cabinet Ballot-Schmit,
7, rue Le Sueur
F-75116 Paris (FR)**

# Description

L'invention concerne les tubes à rayons X à anode tournante dans lesquels le système de suspension de l'anode ne comporte que des paliers magnétiques passifs; elle concerne plus particulièrement, dans de tels tubes, un dispositif de compensation du poids de l'ensemble constitué par l'anode et le rotor.

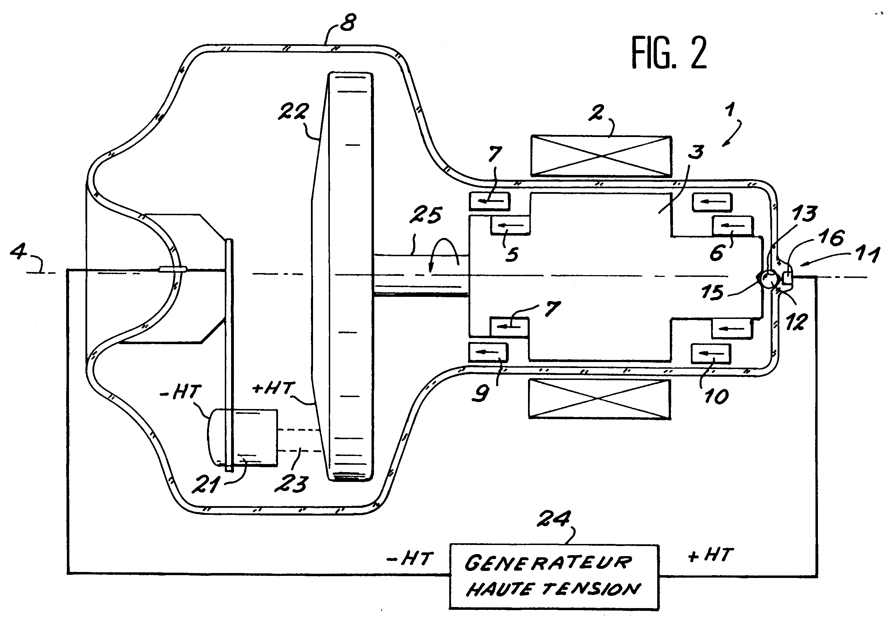

Les tubes à rayons X, pour diagnostic médical par exemple, sont généralement constitués (figure 2) comme une diode, c'est-à-dire avec une cathode 21 et une anode 22 ou anti-cathode, ces deux électrodes étant enfermées dans une enveloppe 8 étanche au vide et qui permet de réaliser l'isolement électrique entre ces deux électrodes. La cathode 21 produit un faisceau d'électrons 23 et l'anode 22 reçoit ces électrons sur une petite surface qui constitue un foyer d'où sont émis les rayons X.

Quand la haute tension d'alimentation est appliquée par un générateur 24 aux bornes de la cathode 21 et de l'anode 22 de façon que la cathode soit au potentiel négatif -HT, un courant dit courant anodique s'établit dans le circuit au travers du générateur 24 produisant la haute tension d'alimentation; le courant anodique traverse l'espace entre la cathode et l'anode sous la forme du faisceau d'électrons 23 qui bombardent le foyer.

Une faible proportion de l'énergie dépensée à produire le faisceau d'électrons 23 est transformée en rayons X, le reste de cette énergie est transformée en chaleur. Aussi compte tenu également des puissances instantanées importantes mises en jeu (de l'ordre de 100 KW) et des petites dimensions du foyer (de l'ordre du millimètre) les constructeurs ont depuis longtemps réalisé des tubes à rayons X à anodes tournantes où l'anode est mise en rotation pour répartir le flux thermique sur une couronne appelée couronne focale, d'aire beaucoup plus grande que le foyer, l'intérêt étant d'autant plus grand que la vitesse de rotation est élevée (en général entre 3.000 et 12.000 tours par minute).

L'anode tournante de type classique a la forme générale d'un disque ayant un axe de symétrie 4 autour duquel elle est mise en rotation à l'aide d'un moteur électrique 1; le moteur électrique a un stator 2 situé à l'extérieur de l'enveloppe 8 et un rotor 3 monté dans l'enveloppe 8 du tube à rayons X et disposé selon l'axe de symétrie 4, le rotor étant mécaniquement solidarisé à l'anode par l'intermédiaire d'un arbre support 25.

De plus en plus fréquemment, on utilise des tubes à rayons X en fonctionnement permanent, ce qui conduit à une énergie dissipée de plus en plus grande. Pour mieux répartir la température de l'anode, on la fait tourner à des vitesses de rotation de plus en plus élevées, de l'ordre de 10.000 tours/minute dans les tubes de type mécanique dont le rotor est monté sur roulements à billes. Ces roulements à billes doivent fonctionner dans des conditions très difficiles car la température est élevée et le vide poussé du tube dans lequel ils sont disposés empêche la lubrification par un liquide.

Par ailleurs, un tel système mécanique est générateur de bruits et de vibrations qui sont préjudiciables au confort du praticien et du patient ainsi qu'à la qualité de l'image obtenue.

Pour pallier les inconvénients des systèmes mécaniques de roulement, il a été proposé des dispositifs de suspension magnétique de l'ensemble rotor-anode, ce qui évite tout frottement mécanique.

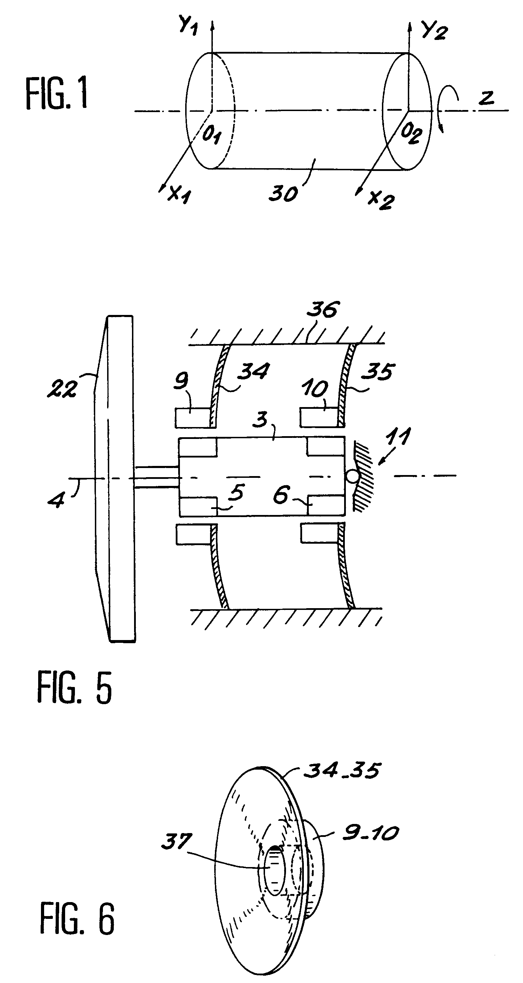

Il est rappelé que pour assurer le maintien d'un corps cylindrique de révolution 30 d'axe $0_1Z$ (figure 1), il faut maîtriser cinq degrés de liberté suivant les axes $0_1X_1$, $0_1Y_1$, $0_2X_2$, $0_2Y_2$ et $0_1Z$, le corps gardant la faculté de tourner autour de l'axe $0_1Z$.

Conformément au théorème d'Ernshaw, il est impossible d'obtenir une complète sustentation magnétique d'un corps, c'est-à-dire sans contact matériel, uniquement de façon passive, c'est-à-dire en n'utilisant que des aimants permanents. C'est pourquoi, tous les dispositifs à paliers magnétiques qui ont été proposés jusqu'ici pour assurer la rotation d'un ensemble rotor-anode d'un tube à rayons X comportent au moins une voie active réalisée à l'aide d'un électro-aimant associé à un circuit électronique d'asservissement en position suivant l'axe correspondant à cette voie active.

On est donc amené à réaliser un système actif assez complexe pour maintenir, par exemple, la position du rotor suivant l'axe $0_1Z$. Pour cela il faut des détecteurs de position dont l'information d'écart de position commande la valeur du courant dans l'électro-aimant de manière à réduire cet écart.

Dans la demande de brevet d'invention FR-A-2 637 124 déposée le 23 septembre 1988, il a été proposé un système de suspension d'une anode tournante de tube à rayons X du type à paliers magnétiques passifs dans lequel le maintien de la position longitudinale du rotor suivant l'axe de rotation ne nécessite pas la mise en place d'un système d'asservissement complexe. Le système proposé comprend (figure 2) au moins deux premières couronnes annulaires aimantées 5,6 fixées au rotor 3 et au moins deux autres couronnes annulaires aimantées (9,10) fixées à l'enveloppe 8 du tube, lesdites couronnes 5,6,9 et 10 étant disposées les unes par rapport aux autres de manière que le rotor 3 puisse tourner sans frottement mécanique autour de l'axe de symétrie 4 et qu'il soit décalé axialement de manière à venir en contact sur une butée 11 disposée du côté opposé à celui de l'anode 22. La force de contact sur la butée 11, due à la répulsion des couronnes annulaires magnétiques 5,6,9 et 10, doit être aussi faible que possible lorsque l'anode est dans une position angulaire extrême telle que son poids l'éloigne de la butée 11. Pour toute autre position, la force du contact sera plus grande et aura pour inconvénient d'augmenter l'usure aux points de contact de la butée 11.

Cet inconvénient n'est pas gênant dans les utilisations pour lesquelles l'axe 4 de l'anode reste horizontal mais le devient lorsque, dans certaines utilisations, l'axe 4 doit être incliné. Il en est ainsi dans un scanner où le plan de rotation du tube, qui correspond au plan de la section du patient à visualiser, bascule de part et d'autre du plan vertical, ou dans un appareil de mammographie dans lequel il y a un basculement complet du tube, l'anode pouvant se trouver en position haute ou en position basse.

Le but de la présente invention est donc de réaliser un dispositif de compensation du poids de l'ensemble rotor-anode dans un tube à rayons X à anode tournante du type à paliers magnétiques passifs.

L'invention, comme revendiquée dans la revendication 1, concerne un dispositif de compensation du poids dans un système de suspension d'une anode tournante d'un tube à rayons X à paliers magnétiques passifs qui comporte un rotor tournant autour d'un axe, dont une extrémité comporte l'anode, un stator disposé à l'extérieur du tube, ledit système de suspension comprenant au moins deux premières couronnes annulaires, lesdites couronnes étant disposées les unes par rapport aux autres de manière que le rotor puisse tourner sans frottement mécanique autour d'un axe de rotation et qu'il soit décalé axialement de manière à venir en contact sur une butée, caractérisé en ce que le dispositif de compensation du poids du rotor et de l'anode comprend un système élastique de support d'au moins une des autres couronnes annulaires aimantées.

Dans un mode de réalisation, le système élastique comprend une structure de support mobile d'au moins une des autres couronnes annulaires aimantées et un ressort qui relie ladite structure à un élément fixe.

Dans un autre mode de réalisation, le système élastique comprend au moins une rondelle élastique dont la partie périphérique est solidaire d'un élément fixe et dont la partie centrale porte une des autres couronnes annulaires aimantées.

D'autres buts, caractéristiques et avantages de la présente invention apparaîtront à la lecture de la description suivante des exemples particuliers de réalisation et de l'art antérieur, ladite description étant faite en référence avec le dessin joint dans lequel :

- la figure 1 est un schéma de principe montrant les six degrés de liberté d'un corps,
- la figure 2 est une coupe schématique longitudinale d'un tube à rayons X comportant un système de suspension à paliers magnétiques passifs selon l'art antérieur,
- la figure 3 est une vue schématique montrant un dispositif de compensation du poids d'un ensemble rotor-anode selon l'invention,
- la figure 4 est une vue schématique montrant un autre dispositif de compensation du poids d'un ensemble rotor-anode selon l'invention,
- la figure 5 est une vue schématique montrant un mode de réalisation du dispositif de compensation du poids de l'ensemble rotor-anode selon l'invention et,
- la figure 6 est une vue en perspective d'un élément d'un dispositif de compensation selon l'invention

Sur la figure 2, déjà en partie décrite dans le préambule, un moteur d'entraînement 1 d'une anode 22 du tube à rayons X comprend un rotor 3 qui peut tourner autour d'un axe de rotation 4. L'une des extrémités du rotor porte l'anode 22 par l'intermédiaire d'un arbre support 25. Ce rotor 3 est maintenu en sustentation par des aimants passifs qui, sur la figure 2, sont au nombre de quatre. Chaque extrémité du rotor 3 porte un aimant permanent 5 et 6 qui a la forme d'une couronne annulaire; le sens de l'aimantation est représenté par les flèches telle que celle référencée 7. Chaque aimant 5 et 6, porté par le rotor 3, coopère respectivement avec un aimant permanent 9 et 10 qui est fixé, par exemple, sur la paroi interne de l'enveloppe 8 du tube. Ces aimants permanents fixes 9 et 10 ont aussi la forme d'une couronne annulaire et le sens de leur aimantation est indiqué par les flèches 7. Le rotor 3 coopère avec un stator 2 qui est disposé à l'extérieur de l'enveloppe 8.

Il est facile de comprendre que, avec le sens des aimantations, une force magnétique de répulsion maintient écartées radialement les couronnes 5 et 6 par rapport aux couronnes 9 et 10 de sorte que le rotor 3 peut tourner autour de l'axe 4 sans contact avec les couronnes magnétiques 9 et 10. Les couronnes 5,6,9 et 10 réalisent ce qu'on appelle des paliers magnétiques passifs.

Avec les sens des aimantations indiqués sur la figure 2, on comprend également que, dans le sens longitudinal suivant l'axe de rotation 4, il existe une force longitudinale qui a tendance à faire échapper les couronnes l'une par rapport à l'autre dès que les plans de ces dernières ne sont plus exactement en coïncidence. Pour les maintenir en coïncidence, il est habituellement prévu des moyens pour détecter le déplacement longitudinal d'un côté ou de l'autre et le corriger, par exemple à l'aide d'un ou plusieurs électro-aimants.

Une telle coïncidence n'est pas recherchée mais, au contraire, il est prévu de décaler les couronnes fixes 9 et 10 et mobiles 5 et 6 l'une par rapport à l'autre dans un sens déterminé de manière à éviter l'équilibre instable de la position centrale de coïncidence. Le sens de ce décalage est tel que l'anode 22 se rapproche des couronnes fixes 9 et 10.

Afin de limiter l'amplitude de ce mouvement, une butée 11 est disposée à l'extrémité du rotor opposée à celle portant l'anode 22. Cette butée sert également de conducteur électrique pour le courant anodique.

Elle doit donc avoir des caractéristiques lui permettant de remplir ces deux fonctions. En tant que butée, elle doit être prévue pour présenter le minimum de frottement afin de ne pas perdre les avantages dus aux paliers magnétiques. En tant que conducteur électrique, son contact électrique avec le rotor doit être suffisamment bon pour conduire le courant anodique en évitant des échauffements locaux.

La butée 11 peut être réalisée de différentes manières en respectant les principes suivants. Le contact doit s'effectuer selon l'axe de rotation du rotor, c'est-à-dire en des points où la vitesse linéaire est quasi nulle. La nature et la géométrie des matériaux utilisés sont choisis de façon à limiter l'usure tout en permettant un bon contact électrique et une bonne conduction électrique.

Sur la figure 2 la butée 11 a été réalisée à l'aide d'une seule bille 12 qui prend appui du côté du rotor, sur un trou borgne 15 de forme conique percé suivant l'axe 4, et du côté de l'enveloppe 8 du tube, sur un autre trou borgne 13 percé axialement sur la borne de sortie 16 solidaire de l'enveloppe 8.

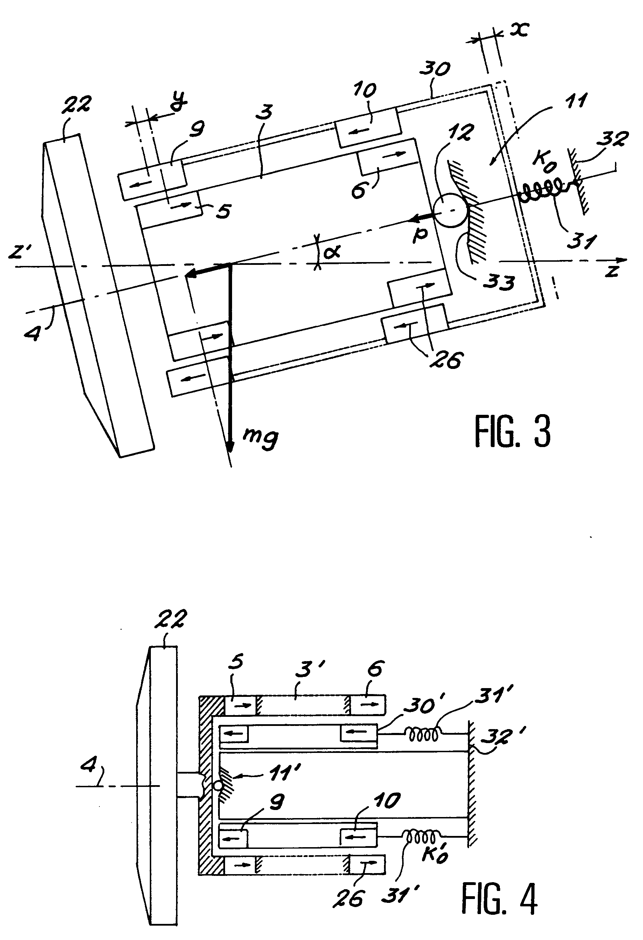

Avec un tel système de suspension, la force de contact sur la butée 11 varie avec la position angulaire de l'axe 4 par rapport à l'horizontal. Le dispositif selon l'invention permet de compenser ces variations de la force de contact sur la butée et sera décrit en relation avec les figures 3,4 et 5 dans lesquelles les éléments identiques à ceux de la figure 2 portent les mêmes références.

Alors que sur la figure 2, les flèches 7 représentent le sens de l'aimantation, sur les figures 3 et 4, les flèches 26 représentent des forces.

Sur la figure 3, on a représenté schématiquement le dispositif de compensation selon l'invention sous la forme d'un système élastique qui comprend, par exemple, une armature 30 de support des couronnes magnétiques 9 et 10 et un ressort 31 de raideur $K_o$ dont une extrémité est solidaire d'un élément fixe 32 et dont l'autre extrémité est solidaire de l'armature 30. Par ailleurs, le rotor 3 a une position fixe et le sens des forces magnétiques est telle qu'il exerce une force p sur la butée 11.

Pour que le système stator-rotor de la figure 3 soit en équilibre, les conditions à remplir sont les suivantes :

- pour le rotor 3, la composante axiale du poids de l'ensemble rotor-anode, qui créerait une variation de poussée sur la butée, doit être exactement compensée par une variation de force résultant du décalage entre les plans des couronnes aimantées;
- pour les couronnes aimantées 9 et 10 ou au moins l'une d'entre elles, la variation de réaction du rotor, combinée avec la composante axiale du poids de ces couronnes et de leur support 30 doit être exactement compensée par la force de rappel du système élastique.

Ces deux conditions peuvent s'écrire sous la forme de deux équations linéaires si l'on suppose une relation de proportionnalité entre

- d'une part, la force répulsive des aimants et le décalage y entre leurs plans, ce qui correspond à un "ressort magnétique" de raideur K, et
- d'autre part, entre la force exercée par le système élastique et le déplacement x des couronnes aimantées 9 et 10 par rapport à une position de référence, ce qui correspond à un "ressort mécanique" de raideur $K_o$.

L'équilibre axial du rotor-anode est donné par :

$$mg \sin\alpha + p = Ky \quad (1)$$

L'équilibre axial des couronnes aimantées 9 et 10 et de leur support 30 est donné par :

$$Mg \sin\alpha + Ky = K_o x \quad (2)$$

équations dans lesquelles :
m est la masse de l'ensemble rotor-anode,
M est la masse des couronnes aimantées 9 et 10 et de leur support 30,
p est la force de poussée exercée par le rotor sur la buttée (11),
g est l'accélération de la pesanteur,
$\alpha$ est l'angle d'inclinaison de l'axe 4 par rapport à l'horizontal.

Par ailleurs, la position du rotor étant fixe par rapport à la butée, le décalage y ne dépend que de la position des couronnes aimantées 9 et 10, c'est-à-dire qu'il ne diffère de x que par une constante $\delta$ telle que :

$$y = x - \delta$$

Des équations (1) et (2), on obtient respectivement :

$$y = \frac{p}{K} + \frac{mg \sin\alpha}{K} \quad (3)$$

$$y = \frac{-K_o \delta}{K_o - K} + \frac{Mg \sin\alpha}{K_o - K} \quad (4)$$

La loi de variation de y en fonction de $\alpha$ devant être unique, il en résulte que :

$$\frac{m}{k} = \frac{M}{K_o - K} \text{ soit } K_o = K \frac{m + M}{m} \quad (5)$$

et

$$\delta = -\frac{p}{K} \frac{(K_o - K)}{K_o} = -\frac{p}{K} \frac{M}{M + m} \quad (6)$$

La raideur $K_o$ du système élastique et son point de repos correspondant à $y = \delta$ sont à ajuster pour remplir les deux conditions données par les formules (5) et (6) dans lesquelles :

- les valeurs de m et M sont connues,
- p est la poussée sur la butée que l'on souhaite obtenir,
- K peut être déterminée expérimentalement à partir de la valeur répulsive axiale en fonction du décalage y.

A titre d'exemple, les valeurs numériques peuvent être les suivantes dans le cas où M = 0,1m :

$$K_o = 1,1 \, K \text{ et } \delta = -\frac{p}{K} \frac{0,1}{1,1} = -0,09 \frac{p}{K}$$

comme $K$ peut être de l'ordre de 20N/millimètre et $p$ de l'ordre de 0,4N, alors $\delta = -1,8$ micron

Pour la position horizontale $\alpha = 0$, on a

$$p = K y_o \text{ soit } y_o = 20 \text{ microns}$$

Le système élastique a pour fonction d'assurer le rappel du rotor vers une position de référence proportionnellement au déplacement.

Ce système élastique peut être réalisé de différentes manières qui sont à la portée de l'homme de métier, par exemple en utilisant la traction, la flexion ou la torsion de lames élastiques.

Les figures 3 et 4 montrent deux autres exemples de réalisation d'un tel système élastique en mettant en oeuvre un ressort.

Dans le cas de la figure 3, les couronnes aimantées 9 et 10 sont portées par la structure 30 qui est reliée au point fixe 32 par l'intermédiaire du ressort 31 de raideur $K_o$. La structure 30 enveloppe le rotor 3 portant l'anode 22. Par suite des positions respectives des couples de couronnes aimantées 5,6 et 9,10, le rotor 3 s'appuie sur la butée 11 qui est constituée de la bille 12 et d'un élément fixe 33.

Dans le cas du mode de réalisation de la figure 4, une structure 30' de support des couronnes aimantées 9 et 10 est disposée à l'intérieur d'un rotor 3' qui porte les couronnes aimantées 5 et 6. Le rotor 3' vient en contact sur une butée 11' autour de laquelle peut coulisser la structure 30' qui est reliée élastiquement à un point fixe 32' par un ou plusieurs ressorts 31' de raideur $K'_o$.

Les figures 5 et 6 montrent un exemple de réalisation particulier du système élastique à l'aide de rondelles élastiques 34 et 35 qui portent respectivement les couronnes aimantées 9 et 10. Chaque rondelle 34 ou 35 présente une partie périphérique qui est solidaire d'un élément fixe 36 et une partie centrale 37 percée qui porte la couronne aimantée correspondante.

Dans les modes de réalisation décrits avec les figures 3 et 4, les deux couronnes aimantées 9 et 10 sont portées par une même structure élastique mais il est clair que les couronnes peuvent être supportées chacune par une structure élastique indépendante comme dans le mode de réalisation de la figure 5.

Par ailleurs, une seule des couronnes aimantées 9 ou 10 pourrait être supportée par une structure élastique, l'autre ayant une position invariable. Enfin, l'invention s'applique à des modes de réalisation dans lesquelles le nombre de couronnes aimantées serait différent de deux.

Il est à noter que dans l'exemple de réalisation de la figure 2 correspondant à l'art antérieur, les couronnes aimantées 9 et 10 sont disposées à l'intérieur de l'enveloppe 8. Pour faciliter la réalisation du système élastique portant les couronnes 9 et 10 selon l'invention, il est préférable que ces dernières soient disposées à l'extérieur de l'enveloppe 8 et il en sera de même du système élastique.

Une telle disposition du système élastique à l'extérieur de l'enveloppe 8, c'est-à-dire à l'extérieur du tube à rayons X, signifie que sur les figures 3, 4 et 5, l'enveloppe 8 passe entre les aimants 5, 6, d'un côté et les aimants 9, 10 de l'autre côté.

Cependant, le système élastique selon l'invention peut également être réalisé à l'intérieur de l'enveloppe 8.

## Revendications

1. Dispositif de compensation du poids dans un système de suspension d'une anode tournante (22) d'un tube à rayons X à paliers magnétiques passifs qui comporte un rotor (3 ou 3') tournant autour d'un axe (4), dont une extrémité comporte l'anode (22), et un stator (2) disposé à l'extérieur du tube, ledit système comprenant au moins deux premières couronnes annulaires aimantées (5,6) fixées au rotor et au moins deux autres couronnes annulaires aimantées (9,10), lesdites couronnes (5,6,9 et 10) étant disposées les unes par rapport aux autres de manière que le rotor (3 ou 3') puisse tourner sans frottement mécanique autour d'un axe de rotation (4) et qu'il soit décalé axialement de manière à venir en contact sur une butée (11 ou 11'), caractérisé en ce que le dispositif de compensation du poids du rotor (3 ou 3') et de l'anode (22) comprend un système élastique de support d'au moins une des autres couronnes annulaires aimantées (9 ou 10) pour assurer le rappel du rotor vers une position de référence.

2. Dispositif de compensation selon la revendication 1, caractérisé en ce que le système élastique comprend une structure ( 30 ou 30') de support mobile d'au moins une des autres couronnes annulaires aimantées (9 ou 10) et un ressort (31 ou 31') qui relie ladite structure (30 ou 30') à un élément fixe (32 ou 32').

3. Dispositif de compensation selon la revendication 1, caractérisé en ce que le système élastique comprend au moins une rondelle élastique (34 ou 35) dont la partie périphérique est solidaire d'un élément fixe (36) et dont la partie centrale porte une des autres couronnes annulaires aimantées (9 ou 10).

4. Dispositif de compensation selon l'une quelconque des revendications précédentes, caractérisé en ce que le système élastique doit avoir une raideur $K_o$ telle que

$$K_o = K \frac{m + M}{m}$$

et en ce que le décalage axial δ entre les premières couronnes aimantées et les autres couronnes annulaires aimantées est telle que

$$\delta = - \frac{p}{K} \frac{M}{M + m}$$

- K étant le coefficient de raideur du ressort magnétique de répulsion constitué par les aimants annulaires,
- p étant la force de poussée exercée par le rotor sur la butée,
- m étant la masse du rotor et de l'anode, et
- M étant la masse des autres couronnes (9, 10) et de leur support (30).

5. Dispositif de compensation selon l'une quelconque des revendications précédentes 1 à 4, caractérisé en ce que le système élastique est disposé à l'intérieur du tube à rayons X.

6. Dispositif de compensation selon l'une quelconque des revendications précédentes 1 à 4, caractérisé en ce que le système élastique est disposé à l'extérieur du tube à rayons X.

**Patentansprüche**

1. Anordnung zum Gewichtsausgleich in einem System zur Aufhängung einer Drehanode (22) einer Röntgenröhre mit passiven magnetischen Lagern, die einen um eine Achse (4) drehbaren Rotor (3 oder 3') aufweist, dessen eines Ende die Anode (22) enthält, sowie einen außerhalb der Röhre angeordneten Stator (2) aufweist, wobei das System wenigstens zwei erste ringförmige magnetisierte Kränze (5, 6) aufweist, die am Rotor befestigt sind, sowie wenigstens zwei andere ringförmige magnetisierte Kränze (9, 10) aufweist, wobei die Kränze (5, 6, 9 und 10) derart zueinander ausgerichtet sind, daß der Rotor (3 oder 3') sich ohne mechanische Reibung um eine Drehachse (4) drehen kann, und daß er axial dergestalt verschoben ist, daß er einen Anschlag (11 oder 11') berührt, dadurch gekennzeichnet, daß die Anordnung zum Gewichtsausgleich des Rotors (3 oder 3') und der Anode (22) ein elastisches System aufweist zur Halterung wenigstens einer der anderen ringförmigen magnetisierten Kränze (9 oder 10), um eine Rückholung des Rotors in Richtung einer Referenzposition zu gewährleisten.

2. Anordnung zum Gewichtsausgleich nach Anspruch 1, dadurch gekennzeichnet, daß das elastische System einen Aufbau (30 oder 30') zur beweglichen Halterung wenigstens einer der anderen ringförmigen magnetisierten Kränze (9 oder 10) aufweist, sowie eine Feder (31 oder 31'),

welche den Aufbau (30 oder 30') mit einem feststehenden Bauteil (32 oder 32') verbindet.

3. Anordnung zum Gewichtsausgleich nach Anspruch 1, dadurch gekennzeichnet, daß das elastische System wenigstens eine elastische Scheibe (34 oder 35) aufweist, deren Umfangsbereich fest mit einem feststehenden Teil (36) verbunden ist und dessen Mittenabschnitt eine der anderen ringförmigen magnetisierten Kränze (9 oder 10) trägt.

4. Anordnung zum Gewichtsausgleich nach einem der vorhergehenden Ansprüche, dadurch gekennzeichnet, daß das elastische System eine derartige Steifigkeit $K_o$ aufweist, daß die folgende Beziehung erfüllt ist

$$K_o = K \frac{m + M}{m}$$

und daß die Axialverschiebung δ zwischen den ersten magnetisierten Kränzen und den anderen ringförmigen magnetisierten Kränzen dergestalt ist, daß die folgende Beziehung erfüllt ist

$$\delta = - \frac{p}{K} \frac{M}{M + m}$$

- mit K als Steifigkeitskoeffizienten der magnetischen Abstoßfeder, bestehend aus den ringförmigen Magneten,
- mit p als der vom Rotor auf den Anschlag ausgeübten Druckkraft,
- mit m als der Masse des Rotors und der Anode und
- mit M als der Masse der anderen Kränze (9, 10) und ihrer Halterung (30).

5. Anordnung zum Gewichtsausgleich nach einem der vorhergehenden Ansprüche 1 bis 4, dadurch gekennzeichnet, daß das elastische System innerhalb der Röntgenröhre angeordnet ist.

6. Anordnung zum Gewichtsausgleich nach einem der vorhergehenden Ansprüche 1 bis 4, dadurch gekennzeichnet, daß das elastische System außerhalb der Röntgenröhre angeordnet ist.

**Claims**

1. Device for compensating weight in a suspension system for a rotating anode (22) of an X-ray tube with passive magnetic bearings which comprise a rotor (3 or 3') rotating about an axis (4), one end of which has an anode (22), and a stator (2) arranged outside the tube, the said system having at least two first magnetized annular rings (5, 6) fixed to the rotor and at least two other magnetized annular rings (9, 10), the said rings (5, 6, 9 and 10) being arranged in such a way with respect to each other that the rotor (3 or 3′) is able to rotate about an axis of rotation (4) without mechanical friction and is axially offset so as to come into contact with a stop (11 or 11′), characterised in that the device for compensating the weight of the rotor (3 or 3′) and the anode (22) has a biassing support system for at least one of the other magnetized annular rings (9 or 10) to ensure that the rotor returns to a reference position.

2. Compensating device as claimed in claim 1, characterised in that the biassing system has a mobile support structure (30 or 30′) for at least one of the other magnetized annular rings (9 or 10) and a spring (31 or 31′) linking the said structure (30 or 30′) to a fixed element (32 or 32′).

3. Compensating device as claimed in claim 1, characterised in that the biassing system has at least one biassing washer (34 or 35) whose peripheral portion is joined to a fixed element (36) and whose central portion bears one of the other magnetized annular rings (9 or 10).

4. Compensating device as claimed in any one of the previous claims, characterised in that the biassing system must have a resilience $K_o$ such as

$$K_o = K \frac{m + M}{m}$$

and in that the axial offset $\delta$ between the first magnetized rings and the other magnetized annular rings is such that

$$\delta = \frac{p}{K} \frac{M}{M + m}$$

- K being the coefficient of resilience of the magnetic repulsion spring formed by the annular magnets,
- p being the thrust force exerted by the rotor on the stop,
- m being the mass of the rotor and the anode, and
- M being the mass of the other rings (9, 10) and their support (30).

5. Compensating device as claimed in any one of the previous claims 1 to 4, characterised in that the biassing system is arranged inside the X-ray tube.

6. Compensating device as claimed in any one of the previous claims 1 to 4, characterised in that the biassing system is arranged outside the X-ray tube.

FIG. 1

FIG. 5

FIG. 6

FIG. 2

GENERATEUR HAUTE TENSION

+ HT

− HT

FIG. 3

FIG. 4